# EUROPEAN PATENT APPLICATION

(11) **EP 2 336 958 A1**
(43) Date of publication of application: **22.06.2011**
(21) Application number: 10015543.1
(22) Date of filing: 10.12.2010
(51) Int. Cl.: G06Q 10/00

(54) **Interactive task management system and method**

(30) Priority: 10.12.2009 US 283869 P; 07.12.2010 US 962305
(71) Applicant: Krief, Denis Leon, 75019 Paris (DE)
(72) Inventor: Krief, Denis Leon, 75019 Paris (FR)
(74) Representative: Wagner, Karl H.

(57) **Abstract**

A computer-implemented interactive task management system and method for use on or with a mobile computer system comprising a computer processor, a memory device, and a display screen is presented. The interactive task management system and method comprises a task management module structured to maintain and facilitate the management of a plurality of user-created tasks, and a task trigger module disposed in a communicative relation with said task management module and cooperatively structured to add or facilitate the addition of at least one task to the task management module. Further, the task trigger module is actionable by a user independent of, and without deploying, the task management module.

## Description

### BACKGROUND OF THE INVENTION

### Claim of Priority

The present application is based on and a claim of priority is made under 35 U.S.C. Section 119(e) to a provisional patent application that is currently pending in the U.S. Patent and Trademark Office, namely, that having Serial No. 61/283,869 and a filing date of December 10, 2009, and which is incorporated herein by reference.

### Field of the Invention

The present invention is generally directed to an interactive task management system and method implemented by and residing on a mobile computer system such as a mobile telephone, music/game player, or other device comprising a computer processor and memory, and/or otherwise cooperatively structured to implement the present invention in the intended fashion, as described in greater detail herein.

### DESCRIPTION OF THE RELATED ART

On any given day, most people have a list of tasks that must be completed, whether socially, personally, and/or professionally. Oftentimes it is difficult, time consuming, and tedious for an individual to remember each task, organize each task into the most effective and efficient order to complete, and then execute each task. More in particular, as the list grows and grows, not only does the list become too complex to manage, but it is also difficult to identify which is the most relevant or efficient task to complete at any given time.

Specifically, some people resort to the old-fashioned handwritten task list where each task is written down on a piece of paper or the proverbial paper napkin. The flaws with this approach are abundantly clear as it is difficult to reorganize the list, update the list, edit the list, etc. In addition, the list may become rather difficult to read or interpret, especially as the user continues to scratch items out or write over or edit certain items.

Others resort to electronic task list tools which generally allow the user to add, modify, and delete items as he or she deems necessary. The problem, however, is that as the list grows, the user must create new lists and/or sub-lists in order to organize and store his or her tasks. This may become rather complicated, tedious, and sometimes unnecessarily time consuming to read through and review entire lists and sub-lists, and essentially cherry-pick which tasks to complete at any given time. Essentially, as the list becomes longer and more complex, the user must periodically review and manually maintain/organize the lists and sub-lists.

As such, there is a need for an interactive task management system and method to simplify the task management process for instance by simplifying the way tasks can be added and by processing, filtering, and/or suggesting certain tasks based upon, for example, a user's particular situation at the time.

### SUMMARY OF THE INVENTION

The present invention is generally directed to a computer-implemented interactive task management system and method. In particular, the system and method as disclosed herein is structured for use on a computer system, such as a mobile or cellular telephone, game system, personal digital assistant, or other device comprising a computer processor, memory, and a display screen and cooperatively structured to facilitate implementation of the present invention in the intended manner.

In particular, at least one embodiment of the system comprises a task management module structured to maintain and facilitate the management of a plurality of user-created tasks. For instance, a user may create a task either directly within the task management system or via a separate and independently executable task trigger module disposed in a communicative relation therewith. Accordingly, the system of at least one embodiment of the present invention further comprises a task trigger module which is actionable by a user independent of the task management module. Specifically, the task trigger module of at least one embodiment is executed from within a contact list tool of the computer system or mobile phone such that a task can be quickly and easily added to the task management module with a minimal number of user clicks, without having to input any text, and further, without exiting the contact list tool or deploying the task management module. Of course the task trigger module of the various embodiments of the present invention may be executable or accessible in other tools, programs, applications, etc. residing on or implemented by the computer system or mobile telephone.

In addition, the task trigger module of at least one embodiment may automatically create one or more task fields and associate the task fields with a selected action. For instance, upon the execution of the task trigger module, the user may be presented with a list of predetermined actions. The user may then select an action from the list, at which point the task trigger module is structured to create a new task, generate task fields based upon the selected action, associate the action with the task fields, and assign values or data to the task fields. The data assigned to the task fields may be extracted from the corresponding contact item or other data accessible by the computer system. This allows the user to easily and efficiently create a task with a minimal number of clicks or interaction, and without having to input or type any text. In short, a task as presented herein, may comprise a combination of a selected action, a task field and its associated values, and a selected or identified contact.

Furthermore, at least one embodiment of the present invention comprises a task election module or other similar mechanism structured to process, score, rule, and organize a plurality of tasks based upon, for example, a user's situation at the time. The user's situation is defined by certain parameters such as, for example, his or her location, available resources, available time, energy level, etc. The system is further structured to display one or more suggested tasks based upon the scores and rules associated therewith. This allows the user to quickly and easily view the one or more suggested tasks and complete or interact with the tasks in the most effective and efficient manner.

These and other objects, features and advantages of the present invention will become clearer when the drawings as well as the detailed description are taken into consideration.

### BRIEF DESCRIPTION OF THE DRAWINGS

For a fuller understanding of the nature of the present invention, reference should be had to the following detailed description taken in connection with the accompanying drawings in which:
Figure 1 is a schematic representation of an exemplary computer system for use in conjunction with at least one embodiment of the interactive task management system and method as disclosed in accordance with the present invention.
Figure 2 is a schematic representation of the interactive task management system of at least one embodiment of the present invention.
Figure 3 is a schematic representation of a task trigger module as disclosed in accordance with at least one embodiment of the present invention.
Figure 4 is a schematic representation of yet another task trigger mechanism of the present invention.
Figure 5 is a schematic representation of a date selection module of at least one embodiment of the present invention.
Figures 6A and 6B are schematic representations of an exemplary embodiment of a task linking module disclosed in accordance with at least one embodiment of the present invention.
Figure 7 is a schematic representation of a display podium as disclosed in accordance with at least one embodiment of the present invention.
Figure 8 is another embodiment of the display podium of the present invention.
Figures 9 through 11 are schematic representation of a selected situation as disclosed in accordance with at least one embodiment of the present invention.
Figures 12A, 12B, and 12C are schematic representations of a situation selection module of at least one embodiment of the present invention.

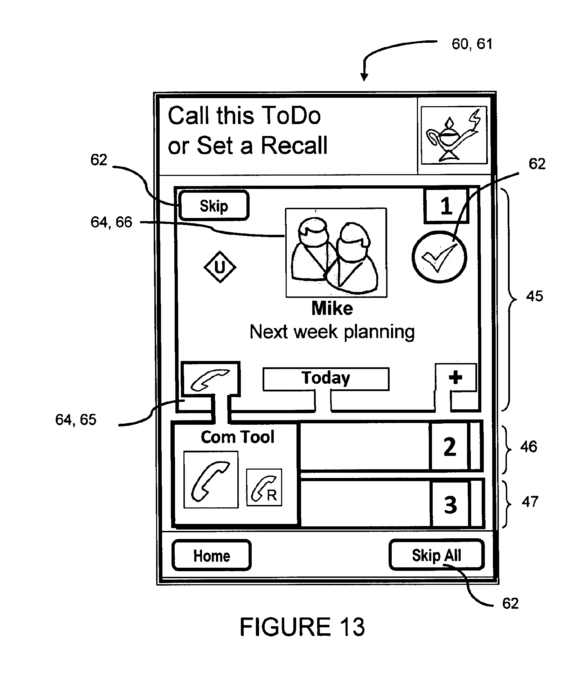

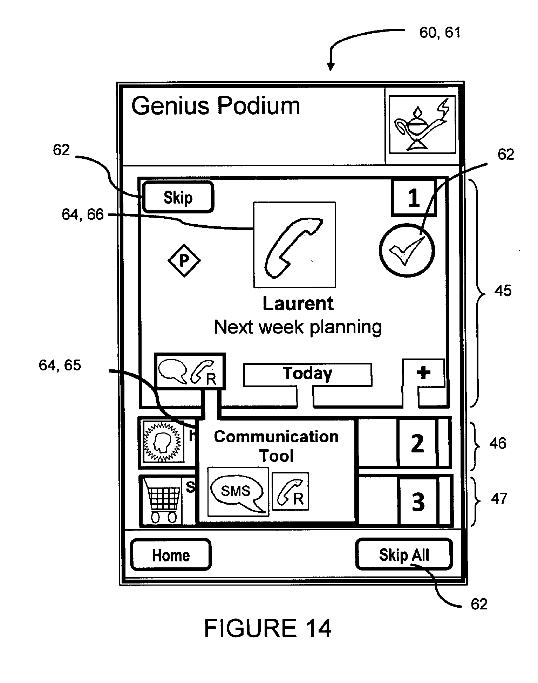

Figures 13 and 14 are schematic representations of a task assistant module as disclosed in accordance with at least one embodiment herein.
Figure 15 is a schematic representation of a task trigger module activation button embedded in the display podium as disclosed in at least one embodiment herein.
Figure 16 is a flow chart of at least one embodiment of the interactive task management method as disclosed in accordance with the present invention.

Like reference numerals refer to like parts throughout the several views of the drawings.

### DETAILED DESCRIPTION OF THE PREFERRED EMBODIMENT

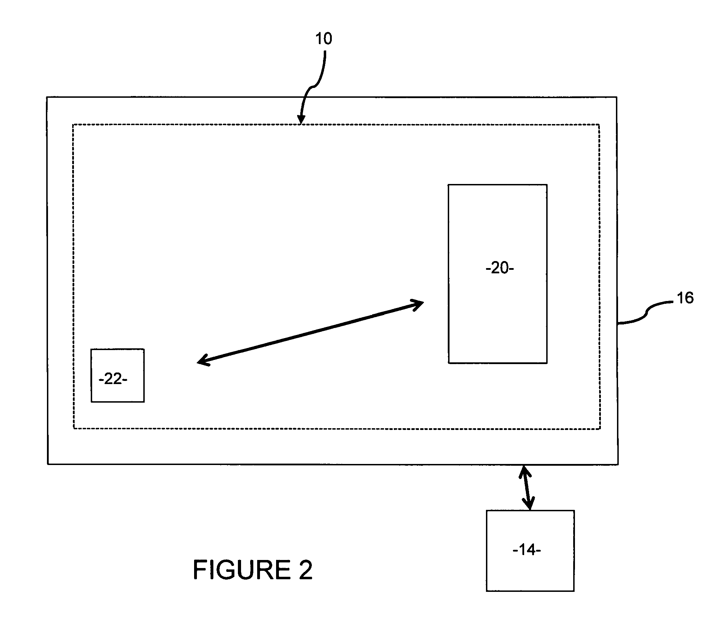

As illustrated in the accompanying drawings, the present invention is directed to an interactive task management system, generally and schematically represented at 10, and method, generally represented at 100. In particular, the interactive task management system 10 of the present invention is implemented by and resides on a computer system 12, including, but certainly not limited to a mobile or cellular telephone, game system, music player, global positioning device, personal digital assistant ("PDA"), or any other device cooperatively structured to implement the present invention in the intended fashion, as described in greater detail herein. Specifically, the computer system 12 may, but need not, be sufficiently mobile such that a user can carry the system 12 around in his or her pocket, hand, etc. Either way, the computer system 12 of the various embodiments of the present invention comprises a computer processor or central processing unit, generally and schematically referenced as 14 in Figure 2, which is structured and disposed to carry out and implement the operative features of the interactive task management system 10. In addition, the computer system 12 further comprises a memory device, generally and schematically represented as 16 in Figure 2, such as an internal, external, or removable memory device disposed in a communicative relation with the processor 14 and structured to store the interactive task management system 10 of the present invention as well as any other data, information, etc. associated therewith.

The interactive task management system 10 of at least one embodiment comprises a task management module 20 or computer software program or application, which, when deployed or executed, is structured to display and facilitate the management of various tasks including task priorities, dates, and other various task fields, as will be described below. As an example, the task management module 20 may be deployed or executed by clicking on or selecting an icon, generally indicated at 21 on the display screen 13 of the computer system 12 or other mobile device. Of course, the task management module 20 may be deployed or executed in any of a number of ways, depending upon, for example, the specific make or model of the computer system 12 and/or operating system being run or executed thereon. The user may create, add, edit, delete, or otherwise interact with the various tasks by virtue of the task management module 20. In addition, and as will be described below, the task management module comprises, or is otherwise capable of deploying or executing, a date selection module, task linking module, task election module, display podium, and situation selection module.

Furthermore, as schematically illustrated in Figure 2, at least one embodiment of the present invention further comprises a task trigger module 22 disposed in a communicative relation with the task management module 20. In particular, the task trigger module 22 is a program or script which, when deployed or executed, is structured and configured to assist with or otherwise create one or more new tasks accessible or manageable within the task management module 20. Specifically, the task trigger module 22 may be deployed or executed independent of the task management module 20 such that new tasks may be created and added to the task management module 20 without opening, executing, or deploying the task management module 20.

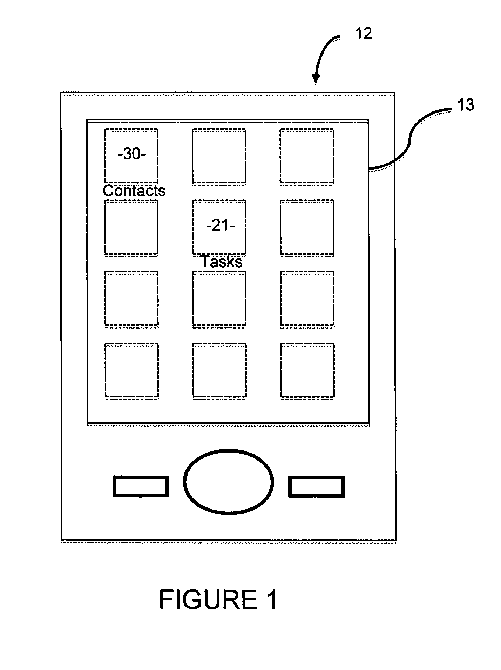

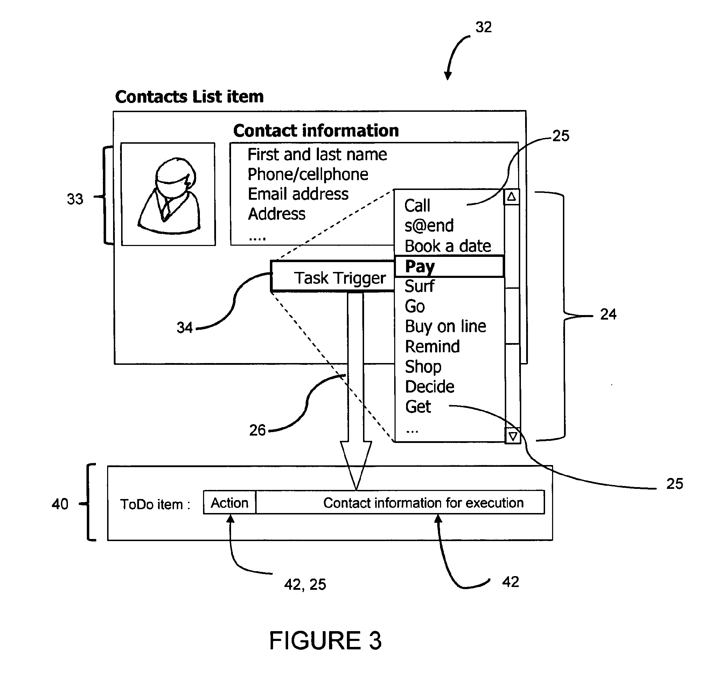

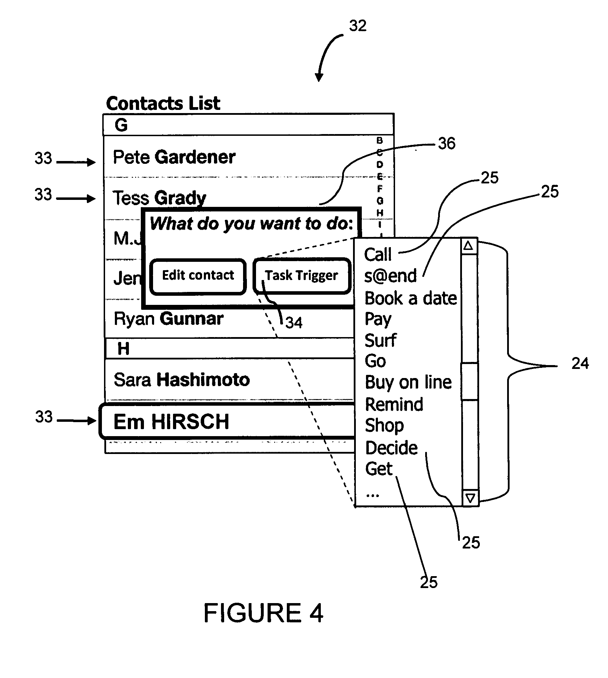

For instance, in at least one exemplary embodiment of the present invention, the task trigger module 22 is embedded or executable within a contact list tool disposed on the computer system 12. Referring again to Figure 1, the computer system 12 may comprise an icon 30, or other device, which when selected, is structured to execute or deploy a contact list tool 32 (illustrated in Figures 3 and 4). The contact list tool 32 generally comprises a compilation or list of contacts or contact items 33 and contact information or data such as one or more phone numbers, addresses, e-mail addresses, names, etc., associated therewith. In addition to a person or individual, a contact item 33 may include details and information relating to a store, business, website, school, location, etc. As such, many day-to-day tasks are associated with one or more contacts 33.

Accordingly, in at least one embodiment, the task trigger module 22 of the present invention is embedded within the contact list tool 32 and/or within one or more of the contact items 33 therein such that upon selection of a button, icon, link, or other device 34, the task trigger module 22 is deployed or executed. In particular, when the task trigger module 22 is executed, in at least one embodiment, the user of the computer system 12 is presented with a compilation or list 24 of predetermined actions 25. As illustrated in Figure 3, the list 24 of predetermined actions 25 may appear as a pop-up window without leaving or exiting the contact list tool 32. The user may then select a predetermined action 25 from the list 24.

As schematically represented by arrow 26 in Figure 3, when a predetermined action 25 is selected, and without leaving, closing, or exiting the contact list tool 32, the task trigger module is structured to automatically create a new task 40 comprising, for example, the selected action 25 and certain contact information necessary to perform the selected action 25. Thus, in at least one embodiment, once the task trigger module 22 is deployed, the present invention is structured to automatically create a new task 40 within or otherwise subsequently accessible by the task management module 20 via one click or selection by the user, and specifically without deploying or executing the task management module 20. For exemplary purposes only, if a user desires to add a task to the task management module 20 for sending an e-mail to a particular contact, the user may select the contact 33 within the computer system's 12 contact list tool 32, deploy the task trigger module 22 (for instance by selecting a "Task Trigger" button), and select "e-mail," "send," "s@nd," or an equivalent action 25 from the list 24 of predetermined actions 25. Upon doing so, the task trigger module 22 is structured to automatically associate the selected action(s) 25 and certain contact information necessary to perform the action(s), for instance, name and e-mail address, with a new task 40, and add the task 40 to the tasks management module 20.

Additionally, in at least one embodiment, the task trigger module 22 is structured to automatically create task fields 42, and associate the task fields 42 with the new task 40 upon its creation via the task trigger module 22 as described above. In addition, the task trigger module 22 may also set default values for certain task fields 42 that are unknown or not provided by the contact item 33. Further, the task fields 42 and the associated default values may vary depending upon the selected action(s) 25. For example, if a "pay" action (or its equivalent) is selected, in addition to the task field 42 associated with the selected action(s) 25, the task trigger module 22 of at least one embodiment is structured to create an "IBAN" task field and associate the "IBAN" task field with the new task 40. If the associated contact item 33 includes "IBAN" (International Bank Account Number) data, then the task trigger module 22 is structured to extract that information from the contact item 33 and enter it into the "IBAN" task field. If, however, the contact item 33 does not include "IBAN" data, then a predetermined default and/or "null" value may be added. As another example, for a "Shop On Line" action, a "URL" task field may be added to the new task 40 and initialized with the "URL" data contained in the contact item 33, if any. If, however, the contact item 33 does not include URL data, then a predetermined default value, such as "null," www.search.com, www.google.com, etc. may be added.

Of course, the task trigger mechanism 22 may be deployed or executed at other locations, such as in the contact list view 32' illustrated in Figure 4. In such an embodiment, upon the selection of a contact item 33, the computer system 12 may deploy a pop-up window 36 or other display item where a user may select or choose to deploy the task trigger module 22, for instance, via a "Task Trigger" link, button, or item 34. Upon doing so, the task trigger mechanism 22 is structured to display or otherwise provide a list 24 of predetermined actions 25, and function in the same manner as described above. In addition, the task trigger module 22 may be executed or deployed from within other features, functions, programs, applications, etc. and will function in a similar manner as described above with reference to the contact list tool.

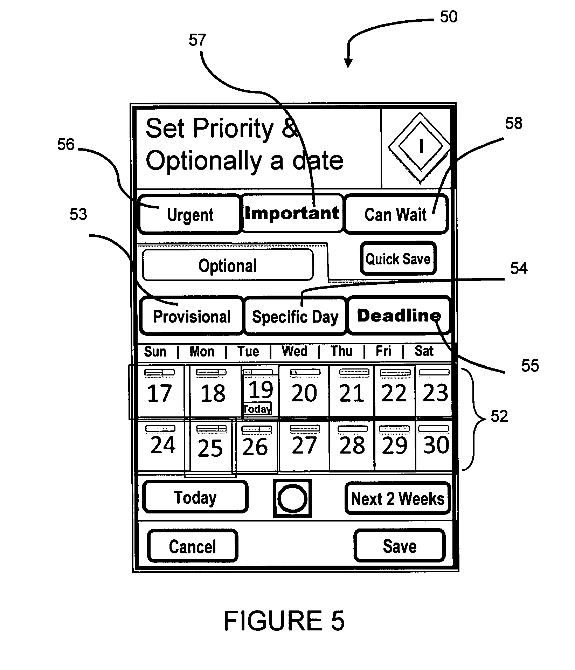

Furthermore, at least one embodiment of the present invention is structured to associate a categorical date to a corresponding task. This may be done at the time of creation, for example, via the task trigger module 22 described above, and/or subsequently via the task management module 20. For example, as generally illustrated in Figure 5, the present invention comprises a date selection module 50 which may be deployed via the task trigger module 22 and/or task management module 20. In particular, upon deploying the date selection module 50, a user may select a particular date, as generally referenced at 52, and a category, as generally referenced at 53-55, to create a categorical date associated with a corresponding task.

Specifically, it is often difficult for a user to select an exact date for the completion of a task, as many tasks have a varying degree of priority and/or importance. Accordingly, the categorical date of at least one embodiment may be defined as a "provisional" date 53, which when selected comprises an estimated task completion date. This allows the user to manage task completion dates that are not set in stone, and thus the task may be completed at or around the selected date, i.e., before, on, or after, the date. In addition, the categorical date of at least one embodiment may also be defined as a "specific day" date 54. This allows the user to manage task completion dates that are to be completed on a specific day, not before and not after. Furthermore, the categorical date may be defined as a "deadline date" 55 which allows the user to manage task completion dates that must be completed by a particular date, not after. Of course these categorical completion dates may also or instead be associated with a time of day, month, year, etc., and thus, the "provisional," "specific day," and/or "deadline" categories of the exemplary embodiment described herein may be associated with a time, day, week, month, year, etc., and is not limited to days as described above.

Oftentimes, however, it is either not possible, or exceptionally difficult or undesirable to select a task completion date or time during the creation of the task, for instance via the task trigger module 22. In particular, the completion of the task may depend upon certain factors, such as the user's location, the environment and resources available, the user's available time, energy, etc. Accordingly, at least one embodiment of the present invention is structured to associate a selected priority level to a corresponding task, as generally illustrated at 56-58. Upon doing so, the task management module 20 may associate and/or display the selected priority with each corresponding task. In at least one embodiment, however, the system 10 is structured to associate a virtual date with the corresponding task, wherein the virtual date is defined based upon the selected priority. For exemplary purposes only, in at least one embodiment, the user may select a priority of "urgent" 56, "important" 57, and/or "can wait" 58. In the event "urgent" or its equivalent is selected, the system 10 of the present invention is structured to associate a predetermined categorical date to the corresponding task, such as, a "deadline" date of two days. As another example, a task with an "important" priority may be assigned a virtual and/or predetermined categorical "deadline" date of three days. Furthermore, a task with a selected "can wait" priority may be assigned a virtual and/or predetermined categorical "provisional" date of six days. Of course, these are merely examples, and as such, the virtual and/or predetermined categorical dates as just described are in no way limited to such.

Moreover, in at least one embodiment, the system 10 and/or the task management module 20 of the present invention is structured to link or associate certain tasks 40 to form one or more task chains, such that each of the tasks 40 within a common task chain share at least one commonality. For instance, oftentimes a user must commute or travel from one place to another in order to complete certain tasks. The present invention allows tasks of a similar nature, for instance, tasks that require a user to travel to a similar or proximate location, to be grouped or otherwise linked with one another to form a task chain.

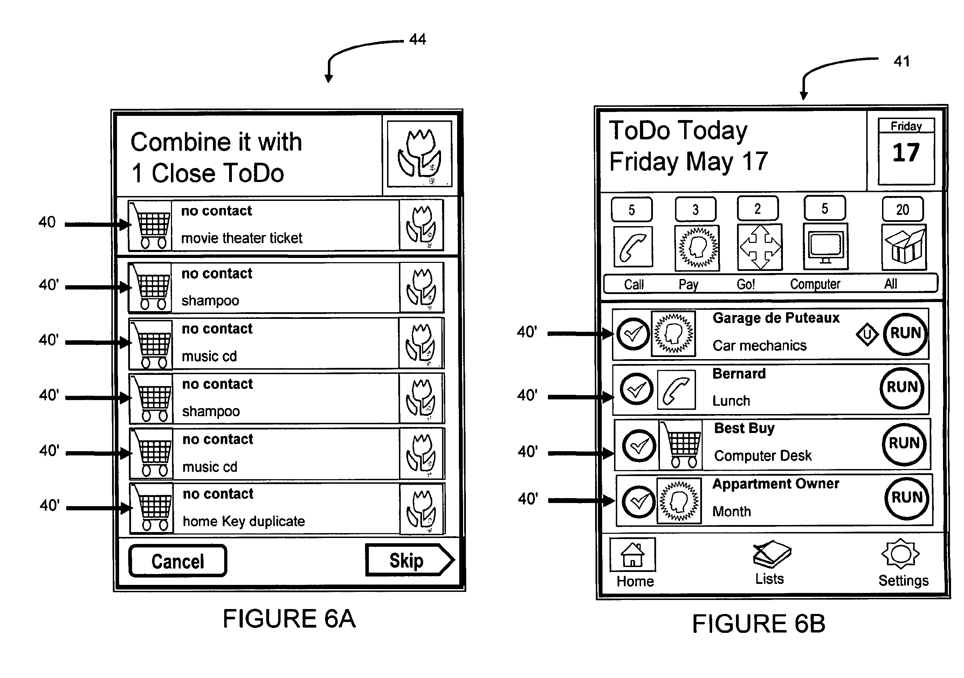

Accordingly, as generally illustrated in Figure 6, during the creation of a task 40, for instance via the task trigger module 22, and/or subsequently, for instance via the task management module 20, a user may selectively link a task 40 with one or more other tasks 40' via a task linking module 44. Upon doing so, a user may link tasks 40, 40' that share one or more commonalities, such as location, project, means to complete, kind, functionality, date of completion, etc. Furthermore, some data associated with one task within a task chain may be shared among all of the tasks therein. For instance, if one task 40, 40' comprises an address task field and others within a common task chain do not, the system 10 may associate, either automatically or upon a user's selection, that address field among all tasks within the task chain as a common reference location and thus without GPS ability or coverage. In addition, it is also contemplated that the system 10 of at least one embodiment of the present invention may automatically create a task chain comprising a plurality of common tasks 40, 40' based upon, for example, addresses associated with each task and/or the computer system's 12 global positioning device and/or geo-localization function.

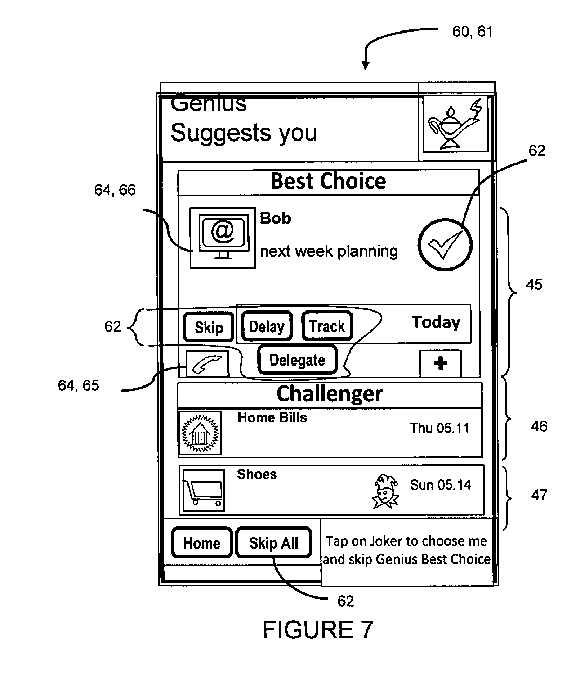

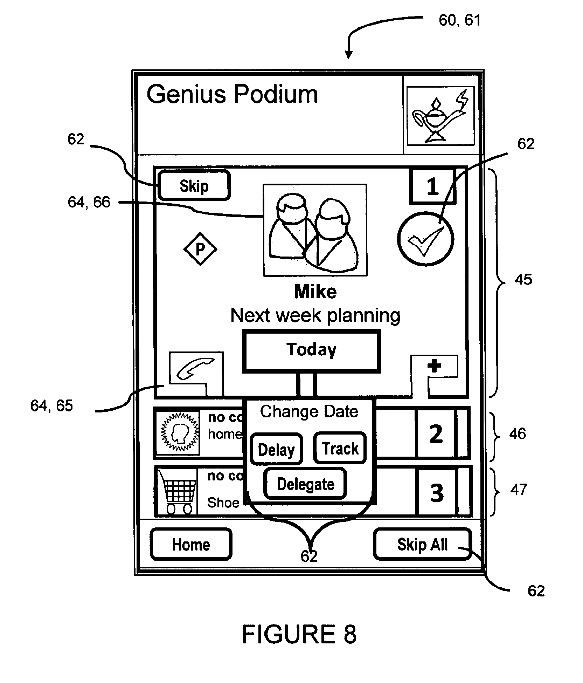

In addition, at least one embodiment of the present invention comprises an automated task election module, generally referenced as 60 in Figures 7 and 8. In particular, the task election module 60 comprises an artificial intelligence engine based on predefined rules and scores, and is structured to analyze and/or process each of the tasks 40 and suggest to the user the most relevant task(s) 40 to be completed or executed based in part upon the priority, categorical date, and/or the user's particular situation, for example, the user's location, energy level, resources, etc. More in particular, a user generally selects tasks to complete based upon the user's given location, environment and resources available or at the user's disposal, the user's available time, and the user's available energy or state of mind. These parameters are constantly changing and evolving as each day, week or month progresses.

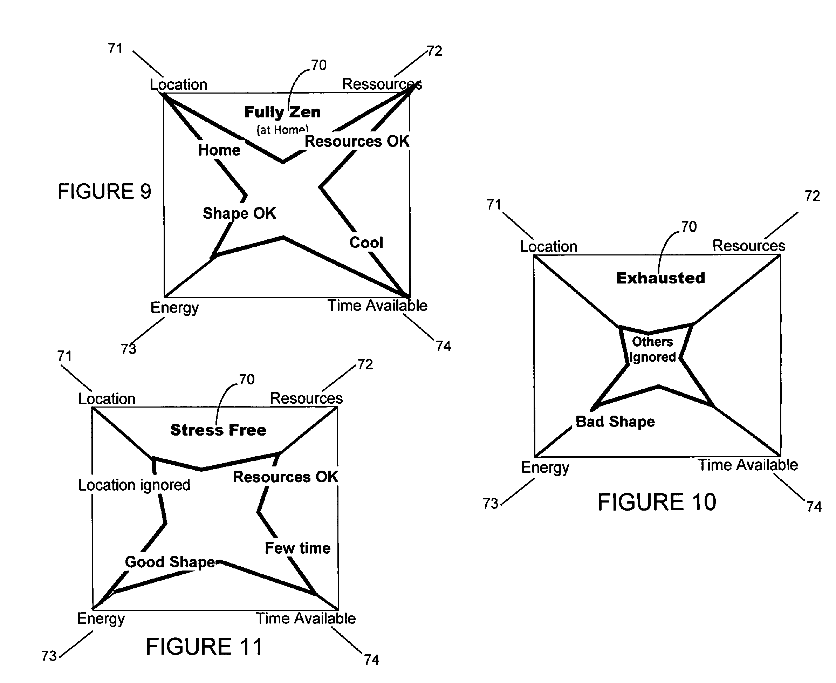

Thus, in at least one embodiment, the task management module 20 and in particular, the task election module 60 thereof, is structured to facilitate a user selecting a particular situation, which may include, but is certainly not limited to, the user's location, energy level, available resources, and available time. For instance, as illustrated in an exemplary embodiment shown in Figures 9-11, at any given time, the user may selectively identify a situation 70 based on one or more parameters 71-74. As illustrated in Figure 9, the user's selected situation may be "Fully Zen (at home)." Furthermore, when a certain situation is selected, for example "Exhausted," as shown in Figure 10, some parameters 71, 72, 74 may be ignored or not analyzed, by the task election module 60. This is because, based upon one or more selected situations, a task or set of tasks may be processed and elected or suggested without the need to analyze all parameters 71-74.

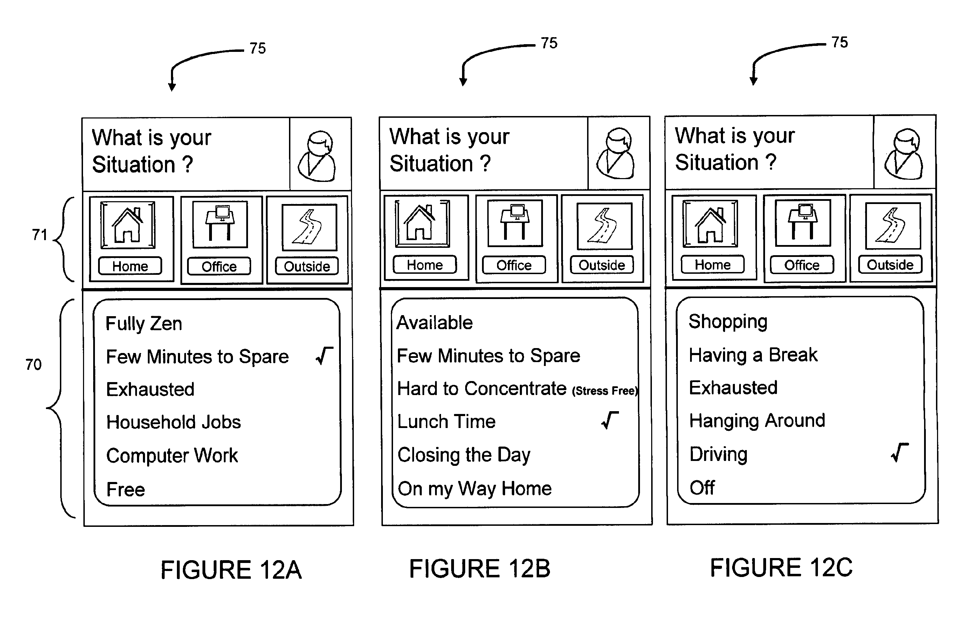

The present invention further comprises a situation selection module 75, as illustrated in Figure 12. The user may select a particular situation 70 and location 71 within the situation selection module 75, and the task election module 60 is structured to analyze the particular situation 70 and location 71, and elect or suggest certain tasks associated therewith, based upon, for example, a score assigned to each task which is established by allocating a specific value or weight to each parameter and using a set of predetermined rules. For exemplary purposes only, a user may place a call in virtually any situation, however, if the user is driving, tasks relating to sending an e-mail are less viable or appropriate.

Moreover, the computer system 12 may automatically detect or set certain situation parameters 71-74, and in particular, the user's location. For instance, using the computer system's 12 GPS or geo-localization functionality, the computer system 12 may automatically or selectively determine the user's exact or approximate location. The task election module 60 of at least one embodiment is then structured to analyze the automated data, either alone or in conjunction with other automated or selected parameters 71-74, and suggest one or more tasks 40 to the user as described herein.

Referring again to Figures 7 and 8, the task election module 60 is structured to display to the user one or more suggested tasks 45, 46, 47. For instance, in the illustrated embodiment, the task election module 60 displays the top three suggested tasks, such as a "best choice" 45, a "challenger" or second choice 46, and a third choice 47. Of course, the task election module 60 of another embodiment may display, process, or suggest any number of tasks, for instance one task or all tasks.

Additionally, the task election module 60 and/or display podium 61 thereof comprises one or more interactive dialogue buttons 62 structured and disposed to allow the user to interact with the suggested task(s) 45, 46, 47. For instance, the interactive dialogue buttons 62 may comprise "skip," "skip all," "delay," "track," "delegate," "check," etc., and/or their equivalents. Accordingly, upon the selection of one or more of the interactive dialogue buttons 62 by the user, the task election module 60 is structured to compute, process, and assign a new score or value to the corresponding task 40 and apply one or more predetermined rules thereto.

For example, in at least one embodiment of the present invention, if a user selects the "skip" interactive dialogue button 62, or its equivalent the system 10, and in particular, the task election module 60 may implement or execute one or more of the following exemplary rules: the user may indicate, via a dialogue box or text input, comments as to the reason for skipping the corresponding task; the task election module 60 will remove the task 40 from the display podium of the task election module 60; the task election module may temporarily freeze the corresponding task 40 to avoid it being immediately resubmitted to the podium 61; the task election module 60 may set a new categorical or virtual date to the task 40, if necessary; the task election module 60 may remove the corresponding task 40 from the current situation; and the task election module 60 may compute, process, and assign a new score to the corresponding task 40.

In at least one embodiment of the present invention, if a user selects the "skip all" interactive dialogue button 62, or its equivalent, the system 10, and in particular, the task election module 60 may implement or execute one or more of the following exemplary rules: the task election module 60 will remove all of the suggested tasks 45, 46, 47 from the display podium 61, the task election module 60 may temporarily freeze all of the suggested tasks 45, 46, 47 to avoid them from being immediately resubmitted to the display podium 61; the task election module 60 may set a new categorical or virtual date to each of the suggested tasks 45, 46, 47; the task election module 60 may compute, process, and assign a new score for each of the suggested tasks 45, 46, 47; etc.

Moreover, in at least one embodiment of the present invention, if a user selects the "delay" interactive dialogue button 62, or its equivalent, the system 10, and in particular, the task election module 60 may implement or execute one or more of the following exemplary rules: the task election module 60 will automatically prompt the user to elect a new date, e.g., a new categorical date, and/or a new priority; the task election module 60 will remove the corresponding task 40 from the display podium 61; the task election module may temporarily freeze the corresponding task 40 to avoid it being immediately resubmitted to the podium 61; the task election module 60 may compute, process, and assign a new score to the corresponding task 40; etc.

In at least one embodiment of the present invention, if a user selects the "track" interactive dialogue button 62, or its equivalent, the system 10, and in particular, the task election module 60 may implement or execute one or more of the following exemplary rules: the task election module 60 will automatically prompt the user to elect a new date, e.g., a new categorical date, and/or a new priority, the system 10 will then remind the user of this task 40 at or near the new date; the task election module 60 will remove the task 40 from the display podium 61 of the task election module 60; the task election module 60 may compute, process, and assign a new score to the corresponding task 40; etc.

Furthermore, in at least one embodiment of the present invention, if a user selects the "delegate" interactive dialogue button 62, or its equivalent, the system 10, and in particular, the task election module 60 may implement or execute one or more of the following exemplary rules: the task election module 60 is structured to communicate or otherwise send the corresponding task 40 to a user-selected third party, for instance via a wireless network, Internet, etc.; the task election module 60 will automatically prompt the user to elect a new date, e.g., a new categorical or virtual date, and/or a new priority, the system 10 will then remind the user of this task 40 at or near the new date; the task election module 60 will remove the task 40 from the display podium 61 of the task election module 60; the task election module 60 may compute, process, and assign a new score to the corresponding task 40; etc.

Also, in at least one embodiment of the present invention, if a user selects the "check mark" interactive dialogue button 62, or its equivalent, indicating that the user has completed the tasks, the system 10, and in particular, the task election module 60 and/or task management module 20 may save, archive, and/or delete the corresponding task 40.

Further, if a user skips, delays, or defers a task 40 a predetermined number of times, the system 10 of the present invention, and in particular, the task election module 60 and/or task management module 20 may label or score the corresponding task as being unable to complete.

At least one embodiment of the present invention further comprises one or more task assistant modules 64 or tools structured and disposed to assist the user in completing or executing a corresponding task 40. For instance, the task assistant module(s) 64 of at least one embodiment may comprise one or more communication tools 65 structured to assist the user in communicating with a particular contact associated with the corresponding task 40. The system 10 of at least one embodiment is structured to automatically embed or provide one or more task assistant modules 64 and/or communication tools 65 within the displayed task 40 and depending upon the particular task 40. For exemplary purposes, the communication tool 65, when launched or executed, is structured to launch a calling, text messaging, SMS, e-mailing, or other communication feature of the computer system 12, such as a mobile cellular telephone or Smartphone.

In addition, the task assistant module 64, 66 of at least one embodiment is structured to activate or launch the computer system's 12 calendar program, mail program, notepad program, mapping program, internet web browser, etc.

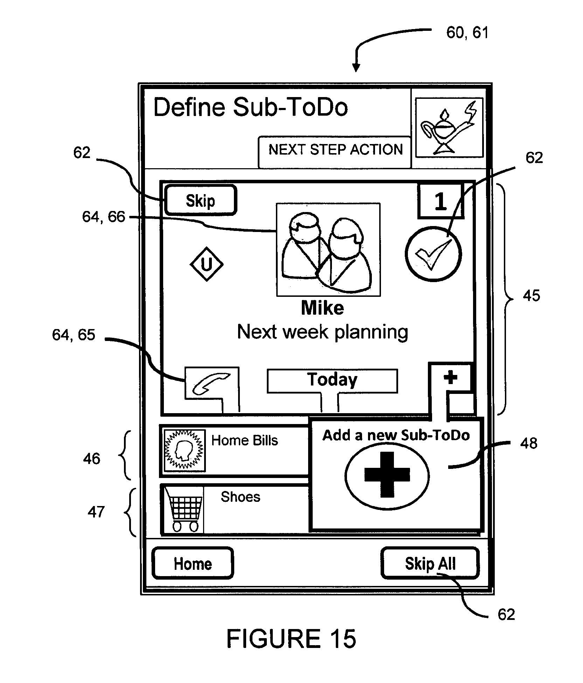

Referring now to Figure 15, at least one embodiment of the present invention comprises a task trigger module activation button associated with a particular task 40 displayed on the display podium 61, as generally illustrated at 48. When selected or executed, the task trigger module activation button 70 is structured to deploy the task trigger module 20, as described above. The user may then create a new task as the next step action or a sub-task. The system 10, and in particular the task election module 60 and/or task management module 20 of the present invention is structured to associate or link the sub-task with the corresponding "parent" task 40. In addition, the sub-task may inherit or otherwise be assigned one or more task parameters associated with the corresponding "parent" task 40, including, but certainly not limited to, the priority, the score, the contact name, address, phone number, e-mail, web site URL, IBAN number, and/or selected action.

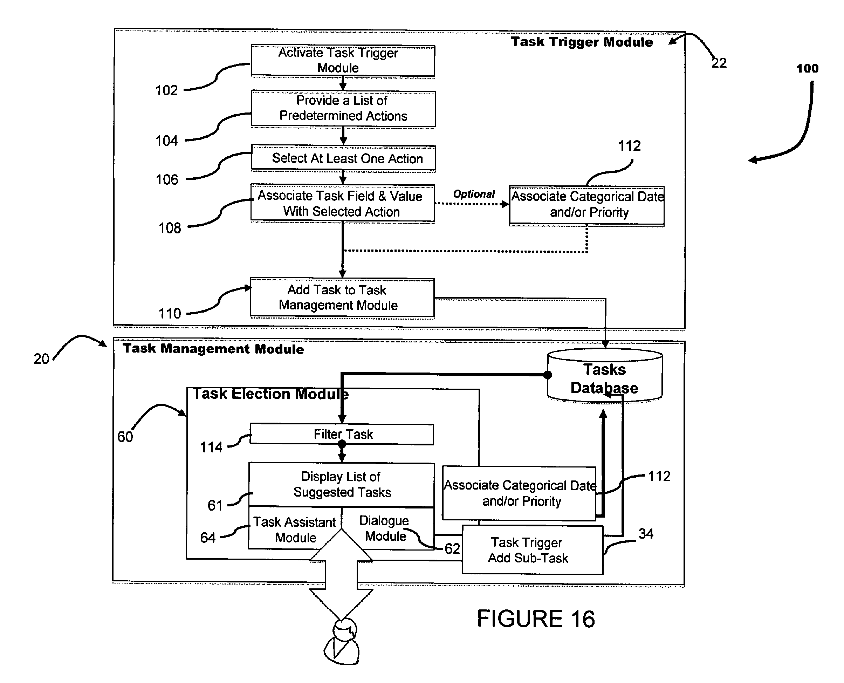

The present invention further comprises an interactive task management method 100 for implementing and/or performing the various features and functions of the interactive task management system 10 as described in detail above. For illustrative purposes, as shown in the flow chart of Figure 16, the method 100 of at least one embodiment comprises activating a task trigger module on a mobile computer system 102 independent of a task management module, and without deploying or executing the task management module. In particular, and as described above, the task trigger module 22 of at least one embodiment may be deployed or actionable within a contact list tool of the mobile computer system such that when the task trigger module 22 is deployed, the computer system stays within and/or otherwise does not exit the contact list tool or deploy the task management module 20. This way, a user can easily and with a minimal number of clicks add a task to the task management module 22 and/or task database associated therewith while browsing or scrolling through the system's contact list tool.

Along these lines, the method 100 of at least one embodiment comprises providing a list of predetermined actions 104 via the task trigger module, selecting at least one of the predetermined actions from the list 106, and associating at least one predetermined task field with a selected one of the actions 108. For instance, depending upon which action is chosen or selected, the task trigger module is structured to create and associate certain task fields with the selected action. As above, the task trigger module may utilize certain information or data contained in the corresponding contact item or assign default values for the task fields.

The method 100 further comprises adding the task, including the selected action and/or associated task fields, to the task management module 110. Again, in at least one embodiment, this may be accomplished without leaving or exiting the contact list tool or other program, and/or without deploy the task management module. Once a task is added to the task management module, the task may be subsequently monitored, edited, viewed, etc.

Prior to adding the task to the task management module, in at least one embodiment of the present invention, the method 100 further comprises associating a categorical date and/or virtual date with a corresponding task 112, for instance via a date selection module as described above. As an example, the date may comprise a "provisional," "specific day," or "deadline" date. A virtual date may be defined at least in part by a selected priority such that a categorical date is assigned to a task based thereupon, as described above. This step in the task trigger module is optional and may be skipped or bypassed if desired by the particular user. In addition, and as illustrated in Figure 16, the user may subsequently associate a categorical date and/or priority to a particular task via the task management module. As such, a user may choose a date and/or priority during creation of the task, for instance, via the task trigger module 22, or subsequently via the podium or task management module 20.

Furthermore, the method 100 further comprises filtering and/or organizing a plurality of tasks 114 within the task management module based upon, for example, a user's situation and predefined or pre-established rules. For instance, a task election module is structured to process, evaluate, and score a plurality of tasks, wherein the score associated with each task may depend on user's situation or availability, location, resources available, time, etc. As described above, the user may periodically select a particular situation and/or the computer system may automatically determine certain parameters such as the user's location, time of day, etc. by virtue of certain GPS, geo-localization, and clock or calendar features.

Once the tasks are scored and filtered, the method 100 comprises displaying a list of suggested tasks based thereon 116. For instance, a display podium and/or task election module may display one or more suggested tasks based upon the particular situation, score, and rules. A user may then interact with the suggested tasks by virtue of certain interactive dialogue buttons or modules, so as to delay, skip, delegate, or complete the task, and/or task assistant modules to facilitate a user in completing the task by providing quick and easy access to features of the system such as the phone, text messaging, SMS messaging, calendar, etc.

For exemplary purposes only, certain priorities and dates are assigned a predetermined score (e.g., a task with an "urgent" priority will receive a higher score or more points than a task with an "important" priority, which will, in turn, receive more points than a task with a "can wait" priority). In certain embodiments, one or more rules, when applied to a particular task, however, will override or bypass the score. For instance, when a user is executing a task associated with a particular contact, one rule may be implemented which will display as the next task to complete another task associated with the same contact, regardless of what score the other task has been assigned. Thus, the system and method of the present invention is structured to analyze the task score(s), the user's situation, and predefined rules in order to filter and display the tasks on the podium. Of course, other rules and scoring systems may be implemented.

Since many modifications, variations and changes in detail can be made to the described preferred embodiment of the invention, it is intended that all matters in the foregoing description and shown in the accompanying drawings be interpreted as illustrative and not in a limiting sense. Thus, the scope of the invention should be determined by the appended claims and their legal equivalents.

Now that the invention has been described,

## Claims

1. A computer-implemented interactive task management system for use on a mobile computer system, the mobile computer system comprising a computer processor, a memory device, and a display screen, said interactive task management system comprising:
a task management module structured to maintain and facilitate the management of a plurality of user-created tasks,
a task trigger module disposed in a communicative relation with said task management module and cooperatively structured to add at least one task to said task management module,
said task trigger module being actionable by a user within a contact list tool of the mobile computer system independent of and without deploying said task management module, and
said task trigger module being structured to automatically create at least one task field, said at least one task field being associated with a user-selected action from a list of predetermined actions.

2. The system as recited in claim 1 further comprising a date selection module structured to associate a categorical date to a corresponding task.

3. The system as recited in claim 2 where said categorical date comprises a virtual date.

4. The system as recited in claim 1 further comprising a task linking module structured to selectively link common tasks to create at least one task chain.

5. The system as recited in claim 1 further comprising a task election module structured to associate a score with at least one task and display suggested tasks based thereupon.

6. The system as recited in claim 5 wherein said task election module is structured to process a user's situation so as to associate said score with said at least one task.

7. The system as recited in claim 1 further comprising at least one interactive dialogue modules structured to allow the user to interact with a corresponding task.

8. The system as recited in claim 1 further comprising at least one task assistant module structured to facilitate the completion of a corresponding task.

9. A computer-implemented mobile task management method comprising:
activating a task trigger module on a mobile computer system independent of a task management module without deploying the task management module, the task trigger module being structured to accept an input and further structured to selectively add at least one task to the task management module,
providing a list of predetermined actions via the task trigger module, and associating at least one predetermined task field with a selected one of the list of predetermined actions to create and add the at least one task to the task management module,
associating a categorical date with a corresponding task, wherein the categorical date is structured to at least partially define a time of completion associated with the corresponding task,
filtering and organizing a plurality of tasks within the task management module based at least in part upon a user's situation, and
displaying a list of filtered and organized tasks to the user.

10. The method as recited in claim 9 further comprising providing the task trigger module within a contact list on the mobile computer system.

11. The method as recited in claim 10 further comprising automatically associating the at least one predetermined task field with a selected one of the list of predetermined actions based upon a selected contact within the contact list.

12. The method as recited in claim 9 further comprising selectively linking a plurality of tasks to form a chain of tasks, wherein each of the tasks within the chain of tasks comprise at least one commonality.

13. The method as recited in claim 9 further comprising defining the categorical date as a provisional date, wherein the provisional date comprises an estimated task completion date.

14. The method as recited in claim 9 further comprising defining the categorical date as a specific date, wherein the specific date comprises an exact task completion date.

15. The method as recited in claim 9 further comprising defining the categorical date as a deadline date, wherein the deadline date comprises an absolute end task completion date, and/or further comprising defining the categorical date as a virtual date, wherein the virtual date is at least partially defined by a selected task priority.
